Europäisches Patentamt

European Patent Office

Office européen des brevets

(11) Publication number: **0 176 334**
**B1**

(12) **EUROPEAN PATENT SPECIFICATION**

(45) Date of publication of patent specification: **17.11.88**

(21) Application number: **85306749.4**

(22) Date of filing: **23.09.85**

(51) Int. Cl.⁴: **G 02 B 27/46, H 04 N 9/07**

(54) **Optical low pass filter.**

(30) Priority: **26.09.84 JP 201355/84**

(43) Date of publication of application:
**02.04.86 Bulletin 86/14**

(45) Publication of the grant of the patent:
**17.11.88 Bulletin 88/46**

(84) Designated Contracting States:
**DE FR GB NL**

(56) References cited:
**EP-A-0 094 676**
**DE-A-2 840 433**
**DE-B-2 027 035**

(73) Proprietor: **SONY CORPORATION**
**7-35 Kitashinagawa 6-Chome Shinagawa-ku**
**Tokyo 141 (JP)**

(72) Inventor: **Nakada, Yasuo**
**Sony Corporation 7-35 Kitashnagawa 6-chome**
**Shinagawa-ku Tokyo (JP)**
Inventor: **Amemiya, Masuko**
**Sony Corporation 7-35 Kitashnagawa 6-chome**
**Shinagawa-ku Tokyo (JP)**

(74) Representative: **Ayers, Martyn Lewis Stanley**
**et al**
**J.A. KEMP & CO. 14 South Square Gray's Inn**
**London, WC1R 5EU (GB)**

EP 0 176 334 B1

**Description**

This invention generally relates to an optical low pass filter and, more particularly, to an optical low pass filter for use with an image sensing device, for example, a solid state image sensing device using a CCD (charge coupled device), or a MOS (metal oxide semiconductor) device or the like which produces a predetermined image pickup output by carrying out spatial sampling in two dimensions.

A color image pickup apparatus, or a color video camera using, for example, a CCD as a solid state image sensing device is arranged to produce a predetermined color video output by sampling a color analyzed image of an object obtained via a color filter which is disposed at the front of the video camera.

In an image sensing system which produces a color signal by carrying out colour coding using a color filter and spatial sampling for each color, it is well known that an aliasing distortion, based upon side band components will be produced, this being caused by the fact that during sampling the sampling carrier is modulated by the sampling frequency component. The generation of the carrier component which will cause such aliasing distortion is different depending on the colour coding.

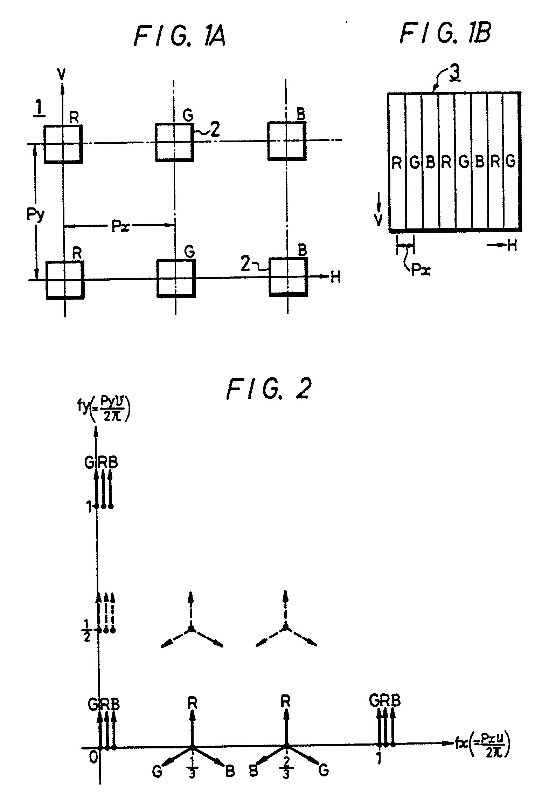

Fig. 1A is a diagram showing a few of the picture elements of a one-chip CCD image sensor 1 and the exposed portion thereof. In Fig. 1A, reference numeral 2 designates the picture element of the image sensor 1, reference letter H designates the horizontal scanning direction thereof, reference letter V designates the vertical scanning direction thereof, reference letter Px designates an opening width in the horizontal direction of the CCD image sensor 1 and reference letter Py designates an opening width in the vertical direction thereof. When a colour filter 3, having three longitudinal stripe-shape color filter elements of each of three primary colors R (red), G (green) and B (blue) repeated as shown in Fig. 1B, is used with the image sensor 1, carrier components, which will be mentioned below will be generated.

Spatial sampling in the horizontal direction of Px and in the vertical direction of Py can be expressed by the following equation (1)

$$\Sigma\Sigma\delta(x-mPx,\ y-nPy) \tag{1}$$

where x and y designate horizontal and vertical coordinates respectively and m and n are both integers.

The carrier component produced by such spatial sampling is expressed by Fourier-transforming Eq. (1) and is presented as

$$F\Sigma\Sigma\delta(x-mPx,\ y-nPy)$$

$$=\frac{4\pi^2}{PxPy}\Sigma\Sigma\delta(u-\frac{2\pi m}{Px},\ v-\frac{2\pi n}{Py}) \tag{2}$$

where $F$ represents the Fourier transform and u and v represent the horizontal and vertical spatial frequencies, respectively.

Accordingly, carrier components $F_R$, $F_G$, and $F_B$ of the three primary color signals R, G and B produced when the color filter 3 (Fig. 1B) is used, are expressed by the following equations (3), (4) and (5), respectively.

$$F_R=\frac{4\pi^2}{6PxPy}\Sigma\Sigma\delta(u-\frac{2\pi m}{3Px},\ v-\frac{2\pi n}{2Py}) \tag{3}$$

$$F_G=F_R\exp(-jPxu) \tag{4}$$

$$F_B=F_R\exp(-j2Pxu) \tag{5}$$

The exp(−jPxu) and exp(−j2Pxu) in the carrier components $F_G$ and $F_B$ represent phase differences relative to the carrier component $F_R$, respectively.

Such carrier components are shown on a spatial spectrum in Fig. 2. In Fig. 2, the abscissa $f_x$ and the ordinate $f_y$ represent the horizontal and vertical frequencies that are normalized by

$$\frac{Px}{2\pi}$$

and

$$\frac{Py}{2\pi},$$

respectively. In the spatial spectra, the length of the arrows represents the magnitude of the carrier component, and their directions represent the phase difference between the carrier components.

From this spatial spectrum, it will be seen that in addition to the base band component with the position of $(f_x, f_y)=(0, 0)$ at the center, the carrier components are produced respectively at the positions $(f_x, f_y)=(\frac{1}{3}, 0)$, $(\frac{2}{3}, 0)$ $(1, 0)$ $(0, \frac{1}{2})$, $(0, 1)$ and so on by the color separation sampling.

The spatial spectra of Fig. 2, show only the carrier components which will cause the aliasing distortion, the carrier components shown by broken lines in Fig. 2 are those which are as cancelled out by the electrical reading processing which will be described later.

The carrier components existing at the position $(1, 0)$ will cause a moiré when an object with a narrow stripe pattern formed of black and white stripes extending in the vertical direction is picked up; the carrier components existing at the position $(\frac{2}{3}, 0)$ will cause a cross color which will present green and magenta colors when a object with a somewhat narrow longitudinal stripe pattern is picked up; and the carrier components existing at the position $(\frac{1}{3}, 0)$ will cause a cross color which will present green and magenta colors when an object with a slightly rough longitudinal stripe pattern is picked up.

In like manner, the carrier components existing at the position $(0, 1)$ will produce a moiré when an object with a narrow horizontal stripe pattern is picked up, and the carrier components existing at the position $(0, \frac{1}{2})$ will cause a flicker to occur by the interlaced scanning when an object with a slightly rough horizontal stripe pattern is picked up.

In this case, however, the flicker caused by the carrier components existing at the position of $(0, \frac{1}{2})$ can be electrically removed, because the carrier components are cancelled out by reading out the CCD charge transfer device in the manner of a known field reading method (where two adjacent horizontal lines are read out simultaneously). For this reason, the quality of a picture deteriorates mainly by virtue of the carrier components in the horizontal direction.

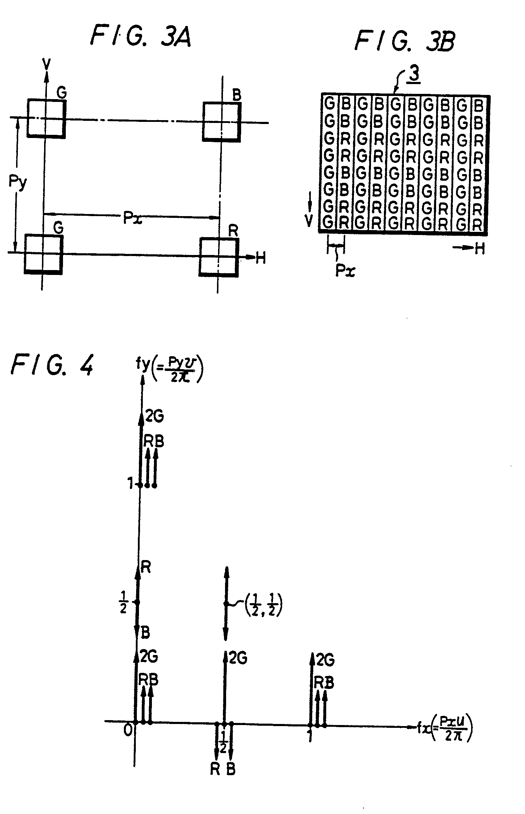

When a color filter of a pattern in which the color filter element of the primary color G is formed of longitudinal stripes and the color filter elements of the other primary colors R and B are formed of color filter elements arranged in line sequential manner as in the color filter 3 shown in Fig. 1B, the basic lattice arrangement as shown in Fig. 3A is used.

The spatial spectrum of the carrier components of the three primary colors R, G and B which results from this sort of coding is shown in Fig. 4.

Also shown in Fig. 4 are the carrier components that are harmful for the signal processing. A moiré will be caused by the particular carrier components existing at the positions $(f_x, f_y)=(1, 0)$ and $(0, 1)$, while a cross color will be caused by the carrier components existing at the positions of $(f_x, f_y)=(\frac{1}{2}, 0)$ and $(0, \frac{1}{2})$. In the case of the color coding as shown in Fig. 3B, since the primary colors R and B are arranged in the line sequential manner, the signal charge can not be read out by the field reading manner used in the example described aboe. However, if vertical interpolation is carried out by the signal processing system provided, after the sample-and-hold operation for color separation was carried out, the moiré in the vertical direction can be reduced.

If a color filter 3 such as is shown in Fig. 1B or 3B is used, the moiré and cross color are produced due to the particular carrier components of the three primary colors R, G and B existing in the horizontal frequency $f_x$ direction, therefore, in the prior art, an optical low pass filter is disposed in the optical system of the image pickup apparatus, whereby the spatial frequency response for horizontal frequencies is made as a low pass characteristic, the carrier components thus being suppressed.

In prior art, the optical low pass filters are constructed by laminating together three crystal plates as disclosed in examined Japanese patent application No. 50336/1983 and unexamined patent application No. 39683/1982. In the prior art optical low pass filter disclosed in the Japanese patent application examined No. 50336/1983 and in the prior art optical low pass filter disclosed in the unexamined Japanese patent application No. 39683/1982, there are respectively provided the low pass characteristics shown in Fig. 12 and Fig. 17 thereof by properly selecting a projection angle relative to the horizontal scanning direction H and a separated distance $d$ on the pickup surface at such optical axis thereof.

If the characteristic of the optical low pass filter is set as described hereinabove, the carrier components existing at the position of $(f_x, f_y)=(\frac{1}{3}, 0)$ are suppressed so that the occurrence of the moiré and cross color can be reduced and the quality of picture can be improved.

Such prior art optical low pass filters are formed by laminating three crystal plates. This has certain disadvantages, such a crystal plate is very expensive, and the three crystal plates must be laminated so that they are accurately positioned, so as to make the projection angles of the optical axes equal to the designed values. This requires high accuracy in laminating the three crystal plates so that it is difficult to manufacture the optical low pass filter. Hence the yield thereof is considerably low and the efficiency thereof is poor.

Accordingly, it is an object of this invention to provide an optical low pass filter which can avoid or reduce the above problem, and provide a filter which can be manufactured easily and at low cost.

It is another object of this invention to provide an optical low pass filter which is excellent in yield and cost performance.

It is further object of this invention to provide an optical low pass filter which is suitable for use with the optical system of an image sensing apparatus which uses a solid state image sensing device formed of a CCD (charge coupled device), MOS (metal oxide semiconductor) or the like.

According to one aspect of the present invention there is provided an optical low pass filter for use in a video camera comprising a solid state image sensing device and a color separating filter, said optical low pass filter characterised by: a first double refraction plate arranged to separate an incident light ray to an ordinary light ray and an extraordinary light ray which is displaced from said ordinary light ray by a distance $d$ in a direction with an angle substantially equal to $\theta$ relative to the horizontal scanning direction of said solid state image sensing device, wherein $\cos 2\theta = \sqrt{\frac{2}{3}}$ ($0° < 2\theta < 90°$), and a second double refraction plate arranged to separate an incident light ray to an ordinary light ray and an extraordinary light ray which is displaced from said ordinary light ray by a distance $d$ in a direction with an angle substantially equal to $-\theta$ relative to the horizontal scanning direction of said solid state image sensing device, whereby said optical low pass filter has the spatial frequency characteristic having a first trap frequency $u_1$ and a second trap frequency $2u_1$.

The above and other features and advantages of the present invention will become apparent from the following detailed description of the illustrative embodiment thereof to be read in conjunction with the accompanying drawings, throughout which like references designate the same elements and parts.

Figs. 1A and 3A are diagrams showing patterns of opening portions of prior art CCD image sensors, respectively;

Figs. 1B and 3B are diagrams each showing an example of a color filter which can be used for the CCD image sensor, respectively;

Figs. 2 and 4 are spectrum diagrams of the spatial frequency of the carrier components produced when the above color filters are used, respectively;

Fig. 5 is a diagram showing an embodiment of an optical low pass filter according to this invention;

Figs. 6A and 6B are diagrams useful for explaining the optical axis projection directions, respectively;

Fig. 7 is a diagram showing an example in which an incident light ray is separated to an ordinary light ray and an extraordinary light ray in accordance with this invention;

Figs. 8A and 8B are diagrams showing projection components projected to the horizontal axis and vertical axis directions, respectively; and

Figs. 9A and 9B and Figs. 10A and 10B are respectively characteristic graphs of the horizontal and vertical frequency responses useful for explaining the present invention.

An embodiment of an optical low pass filter according to this invention will hereinafter be described with reference to the drawings.

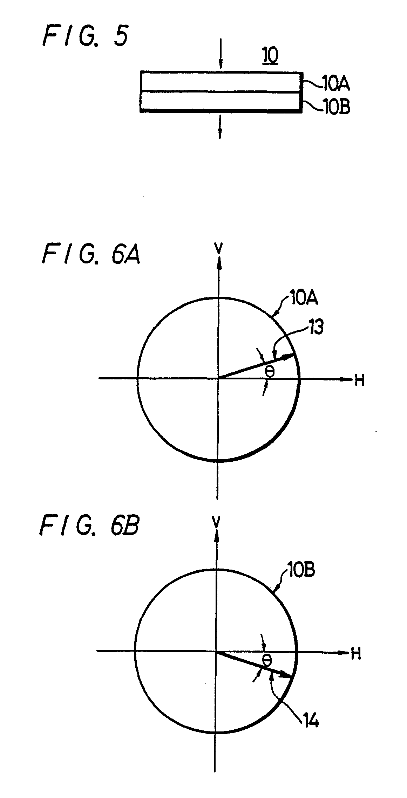

Fig. 5 is a diagram showing an example of the optical low pass filter according to this invention. In Fig. 5, reference numeral 10 generally designates the optical low pass filter and this optical low pass filter 10 is formed of two double refraction plates, i.e., crystal plates 10A and 10B in this embodiment.

The first and second crystal plates 10A and 10B, have their separating distances $d$ equal to each other. The first crystal plate 10A is arranged as shown in Fig. 6A such that its optical axis projection direction 13 relative to the pickup surface of the CCD image sensor 1 has an angle $\theta$ (first quadrant in this embodiment) relative to the horizontal scanning direction H. Whereas, the second crystal plate 10B is arranged as shown in Fig. 6B its optical axis projection direction 14 relative to the pickup surface of the CCD image sensor 1 has an angle—(the fourth quadrant in this embodiment) relative to the horizontal scanning direction H.

Accordingly, the incident light ray on the first crystal plate 10A is separated to an ordinary light ray ($o_1$) and to an extraordinary light ray ($e_1$) with a distance $d$ therebetween in the optical axis projection direction 13. In like manner, the light ray incident on the second crystal plate 10B emitted from the first crystal plate 10A is separated to an ordinary light ray ($o_2$) and to an extraordinary light ray ($e_2$) with the distance $d$ therebetween in the optical axis projection direction 14.

An acute angle $2\theta$ between the optical axis projection directions 13 and 14 is selected as

$$\cos 2\theta = \sqrt{\frac{2}{3}} \tag{6}$$

where $2\theta$ is in the range $0° < 2\theta < 90°$.

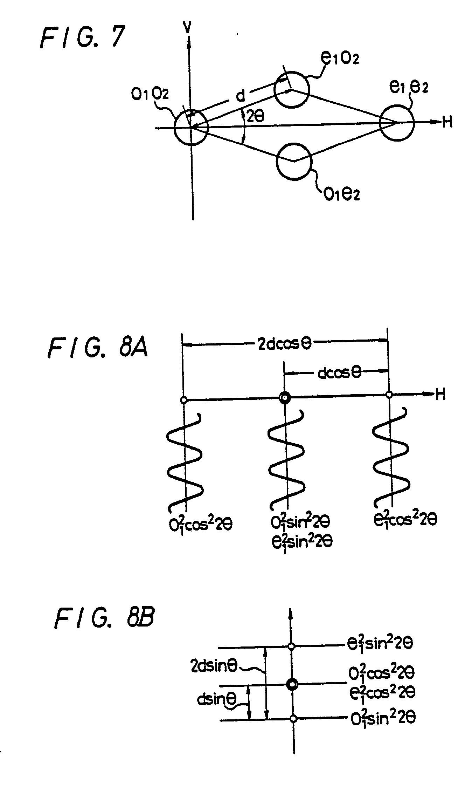

Accordingly, the incident light ray on the first crystal plate 10A is primarily separated to the ordinary light ray $o_1$ and the extraordinary light ray $e_1$ which are equal in light intensity and are parallel to each other and these two light rays $o_1$ and $e_1$ therefrom become incident on the second crystal plate 10B in which each of them is separated to the ordinary light ray and the extraordinary light ray. Therefore, ax shown in Fig. 7, from the second crystal plate 10B, there are emitted an ordinary light ray $o_1o_2$ and an extraordinary light ray $o_1e_2$ based of the ordinary light ray $o_1$, and an ordinary light ray $e_1o_2$ and an extraordinary light ray $e_1e_2$ based on the extraordinary light ray $e_1$, that is, totally four light rays are emitted from the second crystal plate 10B. Fig. 7 shows the relation among these light rays $o_1o_2$, $o_1e_2$, $e_1e_2$ and the shape formed by connecting these light rays becomes a lozenge as shown in Fig. 7, and the line formed by connecting the ordinary light ray $o_1o_2$ and the extraordinary light ray $e_1e_2$ becomes parallel to the horizontal scanning direction H.

The light intensities (powers) of these light rays become as expressed by the following Eq. (7)

$$o_1o_2=o_1{}^2\cos^2 2\theta$$
$$e_1o_2=e_1{}^2\sin^2 2\theta$$
$$o_1e_2=o_1{}^2\sin^2 2\theta$$
$$e_1e_2=e_1{}^2\cos^2 2\theta$$
$$(7)$$

where the light intensities of the ordinary light ray $o_1$ and the extraordinary light ray $e_1$ that are separated by the first crystal plate 10A become equal to each other so that $e_1=o_1$ is established.

Next, if the components of the light rays separated as shown in Fig. 7 are projected to be horizontal and vertical axes they become as shown in Fig. 8A and 8B respectively. In Figs. 8A and 8B, the components indicated by the square equations express the powers of the ordinary light ray and the extraordinary light ray, respectively. In this case, the frequency response in the horizontal direction can be obtained in the similar manner to that shown in the published document of examined Japanese patent application No. 50336/1983.

If now the incident signal $Si(t)$ is taken as $20_1{}^2 \cos 2\pi ft$, since $e_1=o_1$ is established, the emitted signal $So(t)$ can be expressed by the following equation:

$$So(t)=o_1{}^2\cos^2 2\theta \, \cos 2\pi f \, (t-d \cos \theta)$$
$$+e_1{}^2\cos^2 2\theta \, \cos 2\pi f \, (t+d \cos \theta)$$
$$+e_1{}^2\sin^2 2\theta \, \cos 2\pi ft$$
$$+o_1{}^2\sin^2 2\theta \, \cos 2\pi ft$$
$$=20_1{}^2\cos^2 2\theta \, \cos 2\pi ft \, \cos 2\pi fd \cos \theta$$
$$+20_1{}^2\sin^2 2\theta \, \cos 2\pi ft \qquad (8)$$

Therefore, the following Eq. (9) is obtained:

$$\therefore \frac{So(t)}{Si(t)}=\sin^2 2\theta+\cos^2 2\theta \, \cos (2\pi fd \cos \theta) \qquad (9)$$

Since the spatial response is changed as $f{\rightarrow}u$, the frequency response $R_H(u)$ in the horizontal direction becomes as

$$R_H(u)=\sin^2 2\theta+\cos^2 2\theta \, \cos (2\pi ud \cos \theta) \qquad (10)$$

Similarly, the frequency response $R_v(v)$ in the vertical direction becomes as

$$R_v(v)=\cos^2 2\theta+\sin^2 2\theta \, \cos (2vd \sin \theta) \qquad (11)$$

When an object image is subjected to spatial sampling, in the case of Fig. 1B, the carrier components exist at the positions of $(f_x, f_y)=(\frac{1}{3}, 0)$, $(\frac{2}{3},$ and $(1, 0)$. While the moiré and the cross color occur due to the existence of the above carrier components as described hereinabove, it will be clear that upon reproducing a color picture, the quality of picture can be improved more by removing the occurrence of the cross color rather than the moiré.

In view of these points, in accordance with this invention, in order that the occurrence of the cross color, which exerts a strong influence on the quality of picture, may be suppressed sufficiently, the frequency response in the horizontal direction shown by Eq. (10) is determined.

Since the cross color occurs when the carrier components exist at the positions of $(f_x, f_y)=(\frac{1}{3}, 0)$ and $(\frac{2}{3}, 0)$, if in the frequency response $R_H(u)$ obtained from Eq. (10), for the first trap point (frequency) $u_1$, the second trap point is selected to satisfy $u_2 \doteqdot 2u_1$ and $u_1$ is selected to be $(f_x, f_y)=(f_{x1}, 0)=(\frac{1}{3}, 0)$ and $u_2$ is selected to be $(f_x, f_y)=(\frac{2}{3}, 0)$ the above-described object can be achieved.

The angle $\theta$ which makes $u_1$ and $2u_1$ the two trap points can be obtained as follows: From the condition of $R_H(u_1)=R_H(2u_1)=0$, if the follows with Eq (10)

$$R_H(u_1)=\sin^2 2\theta+\cos^2 2\theta\cos(2\pi u_1 d\cos\theta)=0$$
$$R_H(2u_1)=\sin^2 2\theta+\cos^2 2\theta\cos(2\pi \times 2u_1 d\cos\theta)=0 \qquad (12)$$

If the simultaneous Eq. (12) is solved, the following Eq. (13) is obtained

$$\cos 2\theta = \pm \sqrt{\tfrac{2}{3}} \qquad (13)$$

and since $2\theta_1 < 90°$

$$\cos 2\theta = \sqrt{\tfrac{2}{3}} \qquad (14)$$

is established.

The angle $\theta$ which can satisfy Eq. (14) is substantially 17.6°. At that time, if Eq. (14) is substituted into the first Eq. of the simultaneous equation (12) the relation which is expressed by the following equation (15)

$$u_1 = \frac{1}{6d} \times \frac{1}{\cos\theta} \qquad (15)$$

can be obtained.

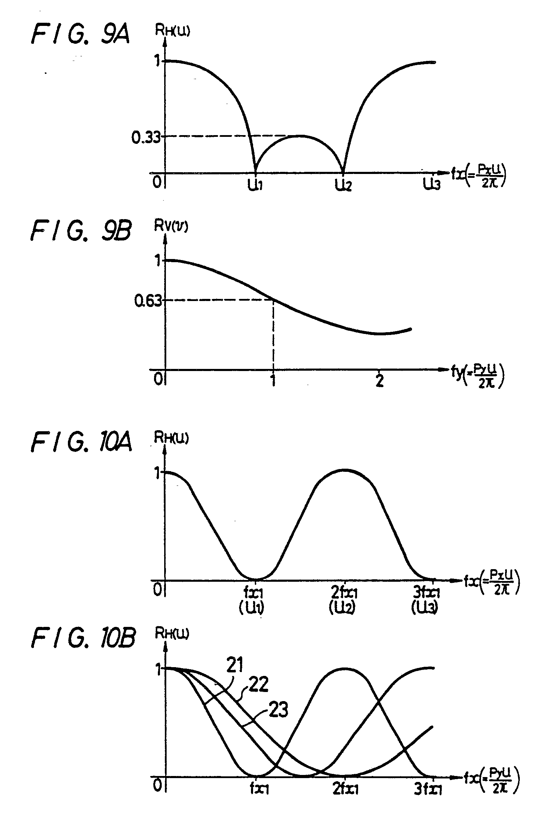

If the angle $\theta$ is selected so as to satify Eq. (14) and the separated distance $d$ is selected in accordance with Eq. (15) such that the horizontal trap frequency $u_1$ coincides with $(f_x, f_y) = (\tfrac{1}{3}, 0)$ the characteristic horizontal frequency response $R_H(u)$ becomes as shown in Fig. 9A and the characteristic vertical frequency response $R_V(v)$ at that time becomes as shown in Fig. 9B.

If the horizontal frequency characteristic of the optical low pass filter 10 is that shown in Fig. 9A, then the carrier component is suppressed at the frequency of $(f_x, f_y) = (\tfrac{1}{3}, 0)$ and $(\tfrac{2}{3}, 0)$ so as to become zero. Therefore, even if there exist the carrier components at these frequencies, the cross color can be prevented from being produced.

Accordingly, it is possible to prevent the reproduced picture image of the achromatic object from being colored.

In addition, since even though the frequency response between the horizontal trap frequencies $u_1$ and $u_2$ is equal to or less than 1/3 of the maximum response for frequencies lower than the frequency $u_1$, ih is possible to lower the frequency response between $u_1$ and $u_2$ sufficiently.

When the horizontal frequency response $R_H(u)$ is selected to be the characteristic as shown in Fig. 9A the frequency response becomes 1 at $u_3 = 3u_1$. In this case, however, taking the spatial frequency characteristic of the whole image sensing system including the optical lens system and the CCD image sensor in the image sensing device into consideration, the frequency response at $u_3 = 3u_1$ is decreased by about 20% from that of the case of Fig. 9A. Therefore, if the carrier components exist at the frequency, $u_3$, the quality of picture is deteriorated a little by the moiré caused thereby. Of course, if the frequency of the trap point $u_1$ is selected to be higher than 4.5 MHz, it is possible to reduce the occurrence of the moiré itself.

While in the above embodiment the angle $2\theta$ is selected so as to satisfy the condition of $2\theta° = .35.2°$, the above-described effects can not be achieved by angles other than the one described hereinabove. For reference, the horizontal spatial response provided when the angle $2\theta$ is selected so as to satisfy the condition of, for example, $2\theta = 45°$ is shown in Fig. 10.

If the condition of $2\theta = 45°$ is established, the horizontal direction response $R_H(u)$ is expressed as

$$R_H(u) = \sin^2 45° + \cos^2 45° \cos (2\pi ud \cos 22.5°)$$

$$= \tfrac{1}{2}(1 + \cos (2\pi ud \cos 22.5°.)) \qquad (16)$$

If Eq. (16) is shown in a schematic representation, Fig. 10A is obtained.

As shown in Fig. 10A, the points to be trapped exist at the positions of $(f_x, f_y) = (f_{x1}, 0), (2f_{x1}, 0)$. If the separation distance $d$ is selected such that the first trap point frequency $u_1$, provided when the $2\theta = 45°$ is established, coincides with the position $(f_{x1}, 0)$ it becomes a characteristic shown by curve 21 in Fig. 10B. In this case, not only is the position $f_x = 2f_{x1}$ not a trap point, but also the horizontal residual response becomes 1 so that the carrier components can not be suppressed at all. As a result, it is not possible to suppress the cross color based on the carrier components existing at the position of $(f_x, f_y) = (\tfrac{2}{3}, 0)$.

If the first trap point (frequency) $u_1$ provided when the condition of $2\theta = 45°$ coincides with the position $(2f_{x1}, 0)$, it becomes a characteristic shown by curve 22 in Fig. 10B. In this case, at the position of $f_x = f_{x1}$, the horizontal residual response becomes 0.5. Thus at this trap point $u_1$, the cross color can not be suppressed so effectively.

If the first trap point $u_1$ provided when the condition of $2\theta = 45°$ is established is selected to be intermediate between the $f_{x1}$ and $2f_{x1}$ (the trap point in the position $(\tfrac{3}{2}f_{x1}, 0)$, it becomes a characteristic as shown by curve 23 in Fig. 10B. In this case, the horizontal residual response at the position of $f_{x1}$ and $2f_{x1}$ becomes 0.25 so that both carrier components can not be suppressed so effectively.

In order to obtain the effective carrier supressing effect, the horizontal residual response must be selected to be lower than about 0.1.

EP 0 176 334 B1

That above-described optical axis projection direction does not have to be selected to be at exactly θ and −θ relative to the horizontal scanning direction H but instead may be near θ and −θ. Further, the material for forming the double refraction plate is not limited to crystal.

When the present invention is applied to the color filter 3 of the color coding shown in Fig. 3B, it will be seen from Fig. 4 that in the horizontal direction, the harmful carrier components exist at the positions of $(f_x, f_y)=(\frac{1}{2}, 0)$ and $(1, 0)$. Therefore, similarly to the embodiment as mentioned hereinabove, in order that the horizontal trap frequency $u_1$ may coincide with the position of $(f_x, f_y)=(\frac{1}{2}, 0)$, the separation distance $d$ is selected in accordance with Eq. (15). Furthermore, since as to the vertical direction, the field reading method can not be employed as the reading method for the charge transfer in the case of the R and B line sequential signals, the carrier components in the vertical direction can be reduced by carrying out vertical interpolation processing in the signal processing system provided, after the color separation and sample-and-hold operation, thus causing no trouble in practical use.

As set forth above, according to this invention, it is possible to provide an optical low pass filter 10 which can suppress the carrier component that is harmful to the reproduction the picture image. In addition, according to this invention, since such an optical low pass filter 10 can be formed by simply laminating the two crystal plates 10A and 10B, it is possible to reduce the number of crystal plates to be used as compared with the prior art, and it is also possible to laminate the crystal plates accurately and rapidly. Accordingly, it is possible to provide an optical low pass filter which is inexpensive, high in yield and excellent in cost performance.

Consequently, the optical low pass filter of this invention is very suitable for being applied to the optical system of an image sensing apparatus using solid state image sensing devices formed of CCD, MOS and the like.

**Claims**

1. An optical low pass filter for use in a video camera comprising a solid state image sensing device and a color separating filter, said optical low pass filter being characterised by: a first double refraction plate (10A) arranged to separate an incident light ray to an ordinary light ray $(o_1)$ and an extraordinary light ray $(e_1)$ which is displaced from said ordinary light ray $(o_1)$ by a distance $d$ in a direction with an angle substantially equal to θ relative to the horizontal scanning direction (H) of said solid state image sensing device, wherein $\cos 2\theta=\sqrt{\frac{2}{3}}/0°<2\theta<90°$, and a second double refraction plate (10B) arranged to separate an incident light ray to an ordinary light ray $(o_2)$ and an extraordinary light ray $(e_2)$ which is displaced from said ordinary light ray $(o_2)$ by a distance $d$ in a direction with an angle substantially equal to −θ relative to the horizontal scanning direction (H) of said solid state image sensing device, whereby said optical low pass filter (10) has a spatial frequency characteristic having a first trap frequency $u_1$ and a second trap frequency $2u_1$.

2. An optical low pass filter (10) according to claim 1, wherein said first and second double refraction plates (10A and 10B) are made of crystal.

3. An optical low pass filter (10) according to claim 1, wherein said first and second double refraction plates (10A and 10B) are laminated.

4. An optical low pass filter according to claim 1, wherein said distance d is selected such that said first trap frequency $u_1$ is $\frac{1}{3}(Px/2\pi)$ where Px is a horizontal pitch of the image sensing unit of said solid state image sensing device, and said color separating filter has a triplet pattern in the horizontal scanning direction.

5. An optical low pass filter according to claim 1, wherein said distance $d$ is selected such that said first trap frequency $u_1$ is $\frac{1}{2}(Px/2\pi)$ where Px is a horizontal pitch of the sensing unit of said solid state image sensing unit of said solid state image sensing device, and said color separating filter has a doublet pattern in the horizontal scanning direction.

6. A video image pick up device comprising an image pick up element of the type which performs spatial sampling of an image via a color separating filter, characterised in that the device includes a filter according to any one of the preceding claims to filter light passing to the separating filter.

**Patentansprüche**

1. Optisches Tiefpaßfilter zur Verwendung in einer Videokamera mit einer Festkörper-Bildaufnahmeeinrichtung und einem Farbtrennfilter

gekennzeichnet durch

eine erste doppeltbrechende Platte (10A), die so angeordnet ist, daß sie einen einfallenden Lichtstrahl in einen ordentlichen Lichtstrahl $(o_1)$ und einen außerordentlichen Lichtstrahl $(e_1)$ trennt, der von dem ordentlichen Lichtstrahl $(o_1)$ in einer relativ zur horizontalen Ablenkrichtung der Bildaufnahmeeinrichtung unter einem Winkel von annähernd θ verlaufenden Richtung um einen Abstand d versetzt ist, wobei $\cos 2\theta=\sqrt{\frac{2}{3}}, 0°<2\theta<90°$,

und eine zweite doppeltbrechende Platte (10B), die so angeordnet ist, daß sie einen einfallenden Lichtstrahl in einen ordentlichen Lichtstrahl $(o_2)$ und einen außerordentlichen Lichtstrahl $(e_2)$ trennt, der von dem ordentlichen Lichtstrahl $(o_2)$ in einer relativ zur horizontalen Ablenkrichtung der

7

Bildaufnahmeeinrichtung unter einem Winkel von annährend-Oerlaufenden Richtung um einen Abstand $d$ versetzt ist,

derart daß die Raumfrequenz-Kennlinie des optischen Tiefpaßfilters (10) eine erste Sperrfrequenz $u_1$ und eine zweite Sperrfrequenz $u_2$ hat.

2. Optisches Tiefpaßfilter nach Anspruch 1, bei dem die erste und die zweite doppeltbrechende Platte (10A, 10B) aus Kristall hergestellt sind.

3. Optisches Tiefpaßfilter nach Anspruch 1, bei dem die erste und die zweite doppeltbrechende Platte (10A, 10B) als Lamininate ausgebildet sind.

4. Optisches Tiefpaßfilter nach Anspruch 1, bei dem der genannte Abstand $d$ den Wert $\frac{1}{3}(Px/2\pi)$ hat, wobei Px die horizontale Teilung der Bildaufnahmeeinheit der Festkörper-Bildaufnahmeeinrichtung ist, und bei dem das Farbtrennfilter in horizontaler Abtastrichtung ein Triplettmuster besitzt.

5. Optisches Tiefpaßfilter nach Anspruch 1, bei dem der genannte Abstand $d$ den Wert $\frac{1}{2}(Px/2\pi)$ hat, wobei Px die horizontale Teilung der Bildaufnahmeeinheit der Festkörper-Bildaufnahmeeinrichtung ist, und bei dem das Farbtrennfilter in horizontaler Abtastrichtung ein Dublettmuster besitzt.

6. Video-Bildaufnahmeeinrichtung mit einem Bildaufnahmeelement, das ein Bild über ein Farbtrennfilter räumlich abtastet, gekennzeichnet durch die Verwendung eines optischen Tiefpaßfilters nach einem der vorhergehenden Ansprüche zur Filterung des durch das Farbtrennfilter dringenden Lichts.

**Revendications**

1. Un filtre passe-bas optique prévu pour l'utilisation dans une caméra vidéo comprenant un dispositif de détection d'image à semiconducteur, et un filtre de séparation de couleurs, ce filtre passe-bas optique étant caractérisé par: une première lame biréfringente (10A) disposée de façon à séparer un rayon lumineux incident en un rayon lumineux ordinaire ($O_1$) et en un rayon lumineux extraordinaire ($e_1$) qui est séparé du rayon lumineux ordinaire ($O_1$) d'une distance $d$, dans une direction qui fait un angle pratiquement égal à $\theta$ par rapport à la direction de balayage horizontal (H) du dispositif de détection d'image à semiconducteur, avec $\cos 2\theta = \sqrt{\frac{2}{3}}$; $0° < 2\theta < 90°$, et une seconde lame biréfringente (10B) conçue pour séparer un rayon lumineux incident en un rayon lumineux ordinaire ($O_2$) et un rayon lumineux extraordinaire ($e_2$) qui est séparé du rayon lumineux ordinaire ($O_2$) d'une distance $d$ dans une direction qui fait un angle pratiquement égal à $-\theta$ par rapport à la direction de balayage horizontal (H) du dispositif de détection d'image à l'état solide, grâce à quoi ce filtre passe-bas optique (10) a une caractéristique de fréquence spatiale qui présente une première fréquence de réjection $u_1$ et une seconde fréquence de réjection $2u_1$.

2. Un filtre passe-bas optique (10) selon la revendication 1, dans lequel les première et seconde lame biréfringentes (10A et 10B) consistent en un cristal.

3. Un filtre passe-bas optique (10) selon la revendication 1, dans lequel les première et seconde lames biréfringentes (10A et 10B) sont accolées en une structure unitaire.

4. Un filtre passe-bas optique selon la revendication 1, dans lequel la distance $d$ est sélectionnée de façon que la première fréquence de réjection $u_1$ soit égale à $\frac{1}{3}(Px/2\pi)$, en désignant par Px le pas horizontal de l'élément de détection d'image du dispositif de détection d'image à semiconducteur, et le filtre de séparation de couleurs présente une configuration de triplet dans la direction de balayage horizontal.

5. Un filtre passe-bas optique selon la revendication 1, dans lequel la distance $d$ est sélectionnée de façon que la première fréquence de réjection $u_1$ soit égale à $\frac{1}{2}(Px/2\pi)$, en désignant par Px le pas horizontal de l'élément de détection d'image du dispositif de détection d'image à sémiconducteur, et le filtre de séparation de couleurs a une configuration de doublet dans la direction de balayage horizontal.

6. Un dispositif de prise de vue vidéo comprenant un élément de prise de vue du type effectuant un échantillonnage spatial d'une image par l'intermédiaire d'un filtre de séparation de couleurs, caractérisé en ce que ce dispositif comprend un filtre selon l'une quelconque des revendications précédentes, pour filtrer la lumière qui passe vers le filtre de séparation.

FIG. 1A

FIG. 1B

FIG. 2

FIG. 3A

FIG. 3B

FIG. 4

2

FIG. 5

FIG. 6A

FIG. 6B

*FIG. 7*

*FIG. 8A*

*FIG. 8B*

FIG. 9A

FIG. 9B

FIG. 10A

FIG. 10B